# EUROPEAN PATENT SPECIFICATION

(11) **EP 4 355 637 B1**
(45) Date of publication and mention of the grant of the patent: **26.11.2025**
(21) Application number: 23761629.7
(22) Date of filing: 13.07.2023
(51) Int. Cl.: B62B 1/00, B62B 1/20

(54) **VARIABLE WHEEL POSITION WHEELBARROW AND METHOD FOR HANDLING WITH WHEELBARROW FOR THE PURPOSE OF CHANGING OF THE WHEEL POSITION**
SCHUBKARRE MIT VARIABLER RADSTELLUNG UND VERFAHREN ZUR HANDHABUNG MIT SCHUBKARRE ZUM WECHSELN DER RADSTELLUNG
BROUETTE AVEC ROUE À POSITION VARIABLE ET PROCÉDÉ DE MANIPULATION AVEC BROUETTE À DES FINS DE CHANGEMENT DE POSITION DE ROUE

(30) Priority: 15.07.2022 SK 752022
(43) Date of publication of application: 24.04.2024
(73) Proprietor: Product Design s.r.o., 831 07 Bratislava (SK)
(72) Inventor: PALDAN, Frantisek, 831 07 Bratislava (SK)
(74) Representative: inventa Patentova a znamkova kancelaria s.r.o.
(86) International application number: PCT/SK2023/050022
(87) International publication number: WO 2024/015026

(56) References cited:
- KR-A- 20110 005 670
- US-A- 5 149 116
- US-A1- 2004 140 638
- US-A1- 2007 182 112

## Description

### Technical field

The proposed solution of the invention relates to the construction of wheelbarrows with one or more wheels having a common axis of rotation, wherein the proposed mechanism changes the position of wheel between the position in front of the body and the position under the body. The invention also relates to handling with the wheelbarrow in order to change the wheel position. In general, wheelbarrows are simple means of transport used for transport of loads over short distances using the lever principle. The invention falls into the field of small-scale mechanisation in the building industry.

### Background

The classic wheelbarrow, as it is known in the prior state of the art, consists of a body, a frame terminated by handles, two supports, and a wheel. The wheel is rotatable on the frame on the opposite side to the handles. The supports are rigidly connected to the frame approximately in the middle of the length of frame. The body is fixed on the frame between the wheel and the supports, thus ensuring the stability of the standing wheelbarrow. The disadvantage is the large vertical force load on the handles of the wheelbarrow from the weight of the load being carried and the need for a large force to unload the load in front of the wheelbarrow wheel
In the state of the art, document KR 20110005670A discloses a known solution of a wheelbarrow which allows a wheel to be moved in front of the body and under the body. The wheel is moved in a horizontal movement using both a carrier and stops supporting on the frame of the wheelbarrow itself, but the supports are fixed and are not used when changing the position of wheel. When the wheel is re-positioned, the brake on one of the frame handles is necessarily used when the brake is applied and the wheel is blocked and then, when the wheelbarrow handles are raised, a considerable force in the horizontal direction is then required to move the wheelbarrow frame, even with the loaded body.

The US patent document US2004/140638A1 discloses a multi-function hand truck that can be used in different modes. It has an elongate frame with handles at one end and wheels that can move between a first position with vertical orientation of the frame, for using as a standard hand truck and a second position. In the second position, the frame is at an angle to a support surface to allow use as a wheelbarrow. It also describes lifting arms that can lift loads and a removable or pivoting support plate.

US5149116A discloses a wheelbarrow where the axle can be fitted with different wheel arrangements (numbers and positions of wheels) to suit different terrains. Wheels are mounted on the axle using removable stop devices.

US2007/182112A1 discloses a cart that can be raised and lowered for loading and unloading. It includes an operable handle assembly that provides mechanical advantage, reducing effort to raise and lower a loaded cart. In the lowered position, material can be directly loaded into the cart without lifting. In the raised position, wheels support the cart for rolling. The handle assembly connects to axles and uses cam mechanisms to vary the mechanical advantage based on the load.

### Essence of the invention

The above-mentioned deficiencies of classical wheelbarrows known in the prior state of the art are eliminated by the wheelbarrow as defined in claim 1 and by the method as defined in claim 7. Preferred embodiments are defined in the dependent claims. The essence of which consists in the fact that it comprises at least one wheel, at least one carrier and at least one support, wherein the supports are mounted swinging on the frame of the wheelbarrow in a plane perpendicular to the axis of the wheel shaft of wheel of the wheelbarrow and around the axis of the support mounting parallel to the axis of the shaft of wheel.

Also, on the frame of wheelbarrow, in the carrier sleeve around the carrier mounting axis parallel to the wheel axis, there are swinging carriers bearing the wheel shaft. The wheel shaft is mounted in the shaft mounting sleeve. The supports are connected to the carriers by rods through the pivot pins, which creates a leverage effect that aids the turnover process. The swing of the carriers is limited by stops in both the first and second positions, whereby in the first position, i.e., the position where the wheel is more under the body, the axial distance of the wheel shaft axis from the axis of the carrier is smaller than their axial distance in the second position, i.e., the position where the wheel is more in front of the body.

It is advantageous if the swinging motion of the carriers is limited by stops within a range of approximately ± 15° from the vertical plane. It is also advantageous if the draw bar is mounted through the pivot pin at half of length of the support located further away from the axis of the support mounting, or particularly advantageously as far as possible from the axis of the support mounting, and is mounted on the carrier through the pivot pin closer to the axis of the carrier mounting, whereby the leverage effect is maximised and the whole turnover process becomes easier, even with a wheelbarrow loaded with a heavy load.

Particularly advantageous is a wheelbarrow arrangement in which the wheelbarrow has at least one wheel mounted between two carriers and two supports, wherein each support is terminated by the foot, or the two supports are connected by the common foot, optionally they are connected by the crossbar.

Alternatively, the wheelbarrow preferably comprises two carriers arranged between the two wheels such that the carriers are mounted on either side of the wheelbarrow in carrier mounting sleeves on the frame of the wheelbarrow and share the common shaft mounting sleeve. The wheel shafts are mounted at each end of the shaft mounting sleeves. Preferably, each support may be terminated by the foot, or the two supports may be connected by the common foot. Advantageously, the single common shaft may also be used. Alternatively, the wheelbarrow can be arranged with one carrier or with one support.

The solution is also based on method of handling with wheelbarrow for the purpose of changing of the position of wheel, which includes the following steps:
- horizontal displacement of the frame of wheelbarrow, in one direction perpendicular to the axis of the shaft at least of one wheel, when at least one support bears at least part of the weight of wheelbarrow and at the same time when at least one wheelbarrow carrier is in the first position, which causes deflection at least of one support in the plane perpendicular to the axis of the shaft at least of one wheel, and thus turnover at least of one carrier from the first position to the second position, and displacement at least of one wheel;
- horizontal displacement of the frame of wheelbarrow, in the opposite direction perpendicular to the axis of the shaft at least of one wheel, when at least one support bears at least part of the weight of wheelbarrow and at the same time when at least one wheelbarrow carrier is in the second position, which causes deflection at least of one support in the plane perpendicular to the axis of the shaft at least of one wheel and thus turnover at least of one carrier from the second position to the first position and displacement at least of one wheel.

Preferably, the horizontal displacement of the frame is accompanied by pushing downwards on the handles of wheelbarrow frame in contact with the ground at least of one of the supports for the purpose of relieving at least one wheel of wheelbarrow.

The advantages of the variable wheelbarrow and the method of handling with wheelbarrow for the purpose of changing of the position of the wheel are evident from the effects by which it manifests itself externally. The originality of the wheelbarrow according to the invention lies in the fact that the design according to the present invention enables, by the proposed procedure, to easily change the wheel position from the wheel position more in front of the body to the wheel position more under the body and vice versa, even when the wheelbarrow is loaded with a load.

By displacing of wheel more under the body, the distance of the wheel axis from the centre of gravity of the whole wheelbarrow is reduced, thus reducing the vertical load on the handles of wheelbarrow when transporting the load as well as manoeuvrability with it. This will also reduce the force required for overturning the load.

By displacing of wheels more in front of the body, a higher stability of the stationary wheelbarrow is ensured, which is especially advantageous when loading a load or a burden. Thus, for example, it is possible to load a wheelbarrow, possibly with an unevenly distributed load or burden, in a position where the wheel is more in front of the body, without fear of it turnover, and then, with the wheelbarrow loaded in this way, to move the wheel more under the body and facilitate further handling with wheelbarrow. The range of swing of the carriers is limited by the stops, which also limit the range of swing of the carriers due to the connection of the supports to the carriers and the draw bars, preferably to approximately ± 15° from the vertical plane as described above.

Thus, the construction solution of wheelbarrow according to the present invention allows to horizontally move the frame forward or backward, preferably while pushing the handles downward for the reason of relieving of the wheel, as a result of contact of the supports with ground and their connection by draw bars with the carriers, to overturn the carriers from one to the other by means of stops of limited position and thus to move the wheel more in front of the body, or more under the body even when the wheelbarrow is loaded with a burden. Pushing on the handles and relieving the wheel simplifies the whole process of turnover of the carriers. Any increased rolling resistance with a smaller diameter wheel can be advantageously eliminated by using a wheel with a wider air-pressurised tyre and, in particular, a motor driven wheel.

### Overview of figures on drawings

The wheelbarrow with variable wheel position and the method of handling with wheelbarrow for the purpose of changing of the wheel position according to invention is further explained by means of the drawings.
Figure 1 and 3 shows the proposed design of a single wheel wheelbarrow in a position more in front of the body.
Figure 2 and 4 shows the proposed design of the wheelbarrow with one wheel in a position more under the body.
Figure 5 shows the frame of the proposed wheelbarrow with one wheel.
Figure 6 shows the carrier of the proposed wheelbarrow with one wheel.
Figure 7 shows a pair of carriers with a common sleeve of mounting for shaft of wheelbarrow with two wheels.
Figure 8 shows the frame with a pair of carriers of the proposed wheelbarrow with two wheels.
Figure 9 and 10 shows, in two views, the proposed design of wheelbarrow with two wheels in a position more in the front of the body.

### Examples of embodiments of the invention

### Example 1

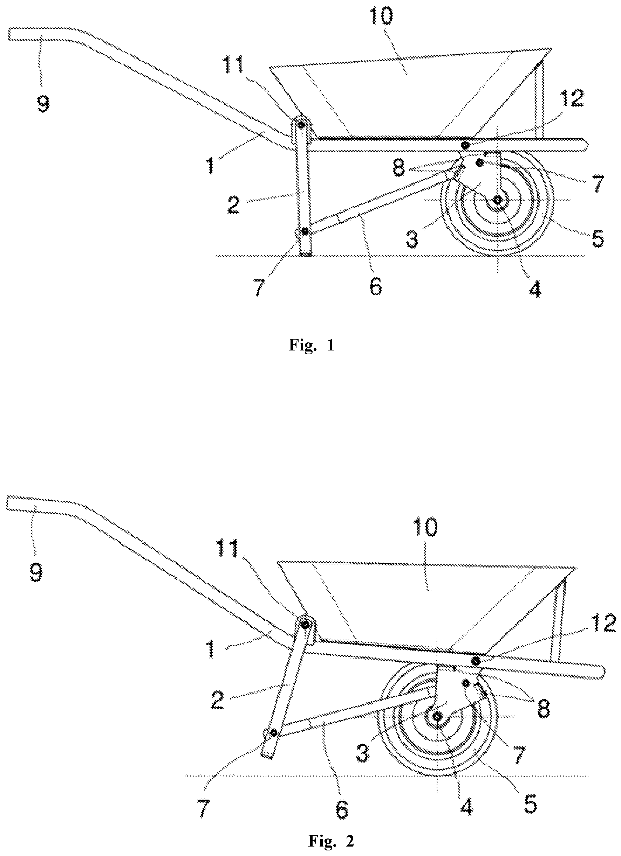

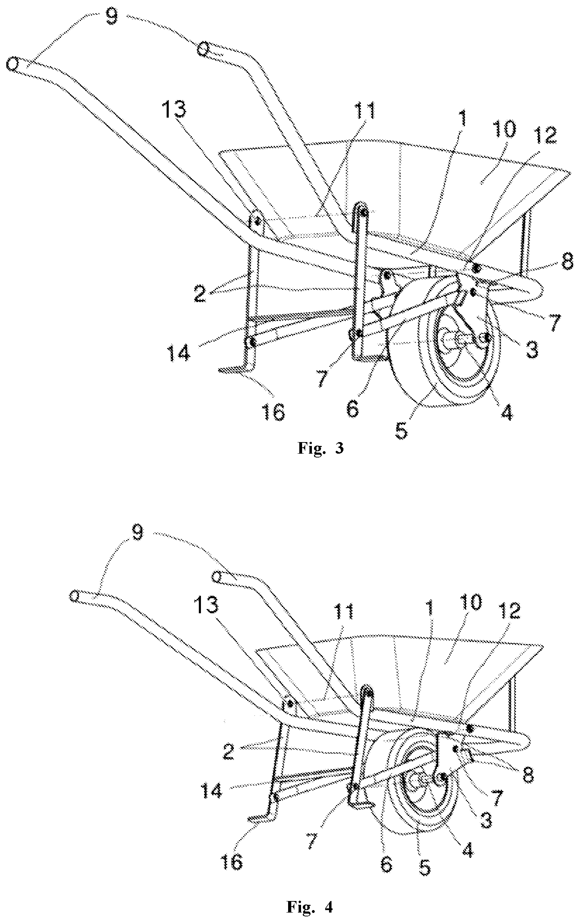

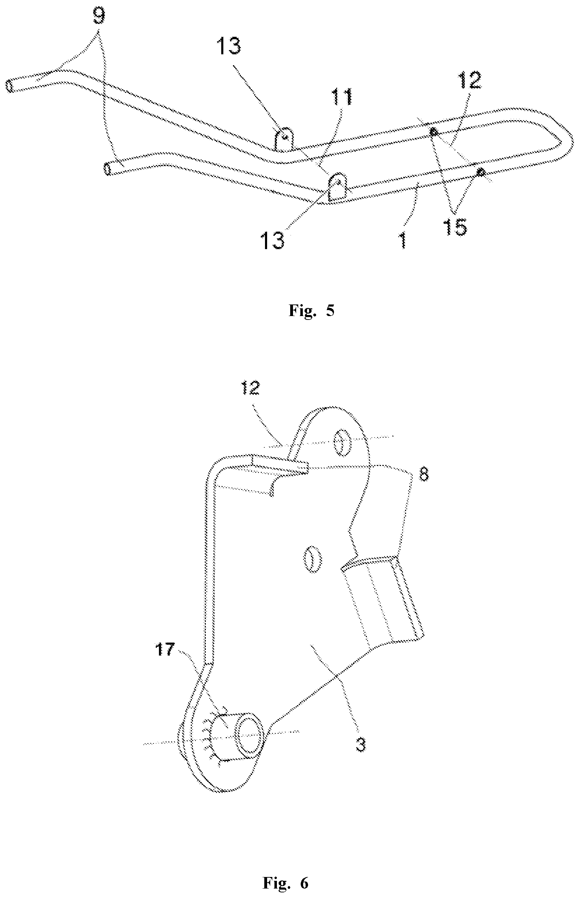

In this example embodiment of the invention, the wheelbarrow with variable position of one wheel is described, which is shown in Figures 1 to 6. On the frame 1, preferably made by bending of a tube, and terminated by handles 9, on both sides of the frame 1 are welded stirrups 13 of the support 2 mounting for swinging connection of the supports 2 in the axis 11 of the support 2 mounting.

On the frame 1, two sleeves 15 of the carrier 3 mounting are welded for swinging connection of the two carriers 3 in the axis 12 of the carrier 3 mounting. The body 10 is fixed on the frame 1. On both sides of the wheelbarrow, a carrier 3, which is preferably made of sheet metal, is mounted in the sleeve 15 of the carrier 3 mounting. It has two stops 8 formed by bending and the welded sleeve 17 for mounting the shaft 4 of wheel 5. The swinging movement of the carriers 3 is limited by the seating of the stops 8 on the frame 1. The supports 2 are preferably made of a flat bar with bending formed feet 16 and are preferably connected by the crossbar 14. In the lower part of the supports 2 and the upper part of the carriers 3 there are holes for pivot pins 7, through which the draw bar 6 connecting the supports 2 to the carriers 3 is connected. The draw bars 6 are preferably made of a flat bar and are shaped so as to eliminate the difference in spacing of the supports 2 and the spacing of the carriers 3.

In an alternative implementation, the supports 2 have one common foot 16, and preferably do not have the crossbar 14, but this is not shown in the figure.

### Example 2

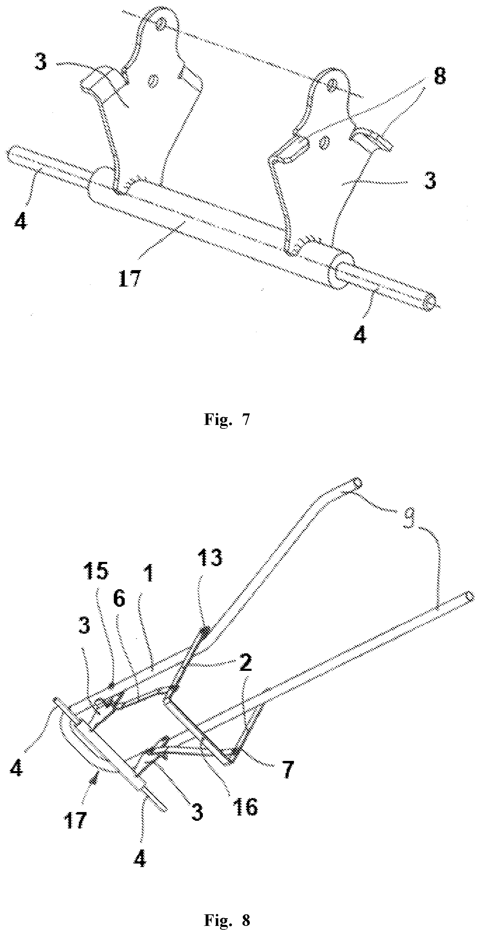

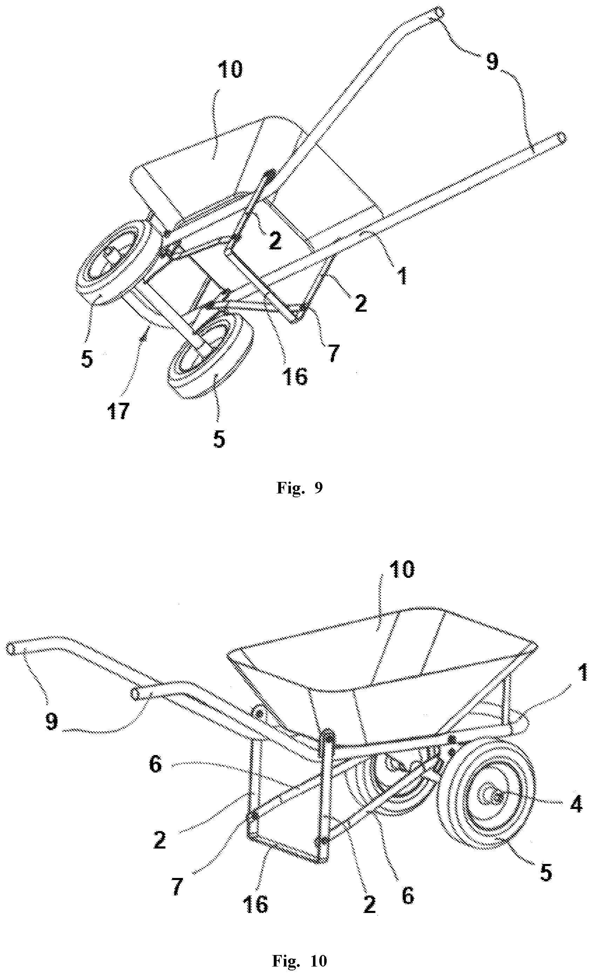

In this example embodiment of the invention, a wheelbarrow with variable position of two wheels is described, which is shown in Figures 7 to 10. On the frame 1, preferably made by bending of a tube, and terminated by handles 9, stirrups 13 of a support 2 mounting are welded on both sides of the frame 1 for swinging connection of the two supports 2 in the axis 11 of the support 2 mounting.

On the frame 1, two sleeves 15 of the carrier 3 mounting are welded for swinging connection of the two carriers 3 in the axis 12 of the carrier 3 mounting. The body 10 is fixed on the frame 1. In this case, on both sides of the wheelbarrow, the carriers 3 are mounted in the sleeves 15 of the carrier 3 mounting on the frame 1 of the wheelbarrow, which have a common sleeve 17 of the shaft 4 mounting. At both ends of the sleeve 17 are shafts 4 for mounting of the wheels 5. The two carriers 3 and the common sleeve 17 for the shafts 4 are thus placed between the two wheels 5.

The swinging movement of the carriers 3 is limited by the seating of the stops 8 on the frame 1. The supports 2 are preferably made of a flat bar with the bending advantageously formed by the common foot 16. In the lower part of the supports 2 and in the upper part of the carriers 3, there are holes for pivot pins 7 through which a draw bar 6 connecting the supports 2 to the carriers 3 is connected. The draw bars 6 are preferably made of a flat bar and are shaped so as to eliminate the difference in spacing of the supports 2 and the spacing of the carriers 3.

In an alternative implementation, the supports 2 have separate footings 16 and preferably also the crossbar 14, or alternatively have only the crossbar 14, which is not shown in the figure.

### Example 3

In this example of embodiment of the invention, method of handling a wheelbarrow for the purpose of changing of the position of wheel is described using the wheelbarrow having a variable position at least of one wheel, comprising the steps provided below. In an initial position, if the at least one wheel 5 of the wheelbarrow is in the first position and if the weight of the wheelbarrow lies at least partially on the at least one support 2, horizontal displacement of the frame 1 of the wheelbarrow by the handles 9 in a direction perpendicular to the axis of the shaft 4 at least of one wheel 5 causes deflection at least of one support 2 in the plane perpendicular to the axis of the shaft 4 at least of one wheel 5 and thereby turnover at least of one carrier 3 from the first position to the second position and displacement of wheel 5.

Similarly, when at least one wheel 5 of the wheelbarrow returns from the second position to the first position, if the weight of the wheelbarrow lies at least partially on the at least one support 2, the horizontal displacement of the frame 1 of the wheelbarrow by the handles 9 in the opposite direction perpendicular to the axis of the shaft 4 at least of one wheel 5 causes the deflection at least of one support 2 in the plane perpendicular to the axis of the shaft 4 at least of one wheel 5 and thus also the turnover at least of one carrier 3 from the second position to the first position, and the displacement of the wheel 5. In both cases, it is advantageous if, when moving the frame, the handles 9 of the frame 1 of the wheelbarrow are simultaneously pushed downwards in contact with the ground at least of one of the supports 2 in order to relieve at least one wheel 5 of the wheelbarrow.

Briefly, the displacement at least of one wheel 5 from a position more in front of the body 10 to a position more under the body 10 is done by horizontally displacing the frame 1 away from itself, preferably while simultaneously pushing downwards on the handles 9 of the frame 1 to relieve at least one of wheels 5.

At least one wheel 5 is held in its current position in front of, or under, the body 10 by the force of gravity. For the functionality of the proposed solution, it is advantageous that the range of swinging at least of one support 2 is limited in area close to the vertical plane. Otherwise, the force required to move the frame 1 horizontally would increase in the process of changing of the position at least of one wheel 5.

### Industrial applicability

The industrial applicability of the wheelbarrow with variable wheel position according to invention is in the building industry, agriculture and gardening.

### List of reference marks

- 1: Frame
- 2: Support
- 3: Carrier
- 4: Wheel shaft
- 5: Wheel
- 6: Draw bar
- 7: Pivot pin
- 8: Stop
- 9: Handle
- 10: Body
- 11: First axis (Axis of support mounting)
- 12: Second axis (Axis of carrier mounting)
- 13: Stirrup for support mounting
- 14: Crossbar
- 15: Sleeve of carrier mounting
- 16: Support foot
- 17: Sleeve of shaft mounting

## Claims

1. A wheelbarrow with a variable position of at least one wheel, comprising the at least one wheel (5), a frame (1) and a body, comprising at least one carrier (3) with a sleeve (17) for mounting a shaft (4) of the at least one wheel (5), comprising the shaft (4) and at least one support (2), wherein the shaft (4) is mounted in the sleeve (17), wherein the carrier (3) is mounted on the frame (1) swingable around a second axis (12) parallel to an axis of the shaft (4), where the at least one support (2) is mounted on the frame (1) swingable in a plane perpendicular to the axis of the shaft (4) around a first axis (11) parallel to the axis of the shaft (4), where the at least one support (2) is connected by a draw bar (6) to the at least one carrier (3) through pivot pins (7), where a swing of the at least one carrier (3) is limited by stops (8) in a first position and in a second position, wherein in the first position an axial distance of the axis of the shaft (4) from the first axis (11) is smaller than their axial distance in the second position, while the arrangement of the at least one support (2), of the at least one wheel (5) and of the at least one carrier (3) is such that while the at least one support (2) is at least partially bearing the weight of the wheelbarrow, the at least one carrier (3) is in the first position, the horizontal movement of the frame (1) of the wheelbarrow in one direction perpendicular to the axis of the shaft (4) causes the deflection of the at least one support (2) in the plane perpendicular to the axis of the shaft (4) and thus a turnover of the at least one carrier (3) from the first position to the second position and the displacement of the at least one wheel (5), **characterized in that** as long as the at least one support (2) bears at least partially the weight of the wheelbarrow and the at least one carrier (3) is in the second position, horizontal movement of the frame (1) of the wheelbarrow in the opposite direction perpendicular to the axis of the shaft (4) causes deflection of the at least one support (2) in the plane perpendicular to the axis of the shaft (4) and thus turnover of the at least one carrier (3) from the second position to the first position and displacement of the at least one wheel (5).

2. The wheelbarrow according to claim 1, **characterized in that,** the draw bar (6) is attached through the pivot pin (7) at a half of length of the at least one support (2) spaced further from the first axis (11) of the at least one support (2), and on the at least one carrier (3) is attached through the pivot pin (7) at a position whose distance from the second axis (12) of the at least one carrier (3) is smaller than its distance from the axis of the shaft (4).

3. The wheelbarrow according to any one of claims 1 to 2, **characterised in that,** it comprises one wheel (5) mounted between two carriers (3), and two supports (2), each support (2) is terminated by a foot (16).

4. The wheelbarrow according to any one of claims 1 to 2, **characterised in that,** it comprises one wheel (5) mounted between two carriers (3), and two supports (2), the supports (2) are connected by a common foot (16).

5. The wheelbarrow according to any one of claims 1 to 2, **characterised in that,** it comprises two carriers (3) mounted between two wheels (5), and two supports (2), each support (2) is terminated by a foot (16).

6. The wheelbarrow according to any one of claims 1 to 2, **characterised in that,** it comprises two carriers (3) mounted between two wheels (5), and two supports (2), wherein the supports (2) are connected by a common foot (16).

7. A method for handling with wheelbarrow according to any one of claims 1 to 6, comprising the following step:
- if weight of the wheelbarrow lies at least partially on the at least one support (2) and, at the same time, if the at least one wheelbarrow carrier (3) is in the first position, horizontal displacement of the frame (1) of the wheelbarrow in one direction perpendicular to the axis of the shaft (4) causes deflection of the at least one support (2) and thus turnover of the at least one carrier (3) from the first position to the second position and displacement of the at least one wheel (5),
**characterized in that**, it further comprises the following step:
- if the at least one support (2) bears at least partially the weight of the wheelbarrow and, at the same time, if the at least one carrier (3) of the wheelbarrow is in the second position, the horizontal displacement of the frame (1) of the wheelbarrow in the opposite direction perpendicular to the axis of the shaft (4) causes the deflection of the at least one support (2) and thus the turnover of the at least one carrier (3) from the second position to the first position and the displacement of the at least one wheel (5).

8. The method according to claim 7, further comprising the following step:
- pushing downwards one handles (9) of the frame (1) of the wheelbarrow when at least one of the supports (2) is in contact with the ground to relieve the at least one wheel (5) of the wheelbarrow.

## Patentansprüche

1. Eine Schubkarre mit variabler Position von mindestens einem Rad, die mindestens ein Rad (5) einen Rahmen (1) und einen Kasten enthält, mindestens einen Mitnehmer (3) mit einer Büchse (17) zur Lagerung der Welle (4) von mindestens einem Rad (5) enthält, das eine Welle (4) und mindestens eine Stütze (2) enthält, wobei die Welle (4) in einer Büchse (17) gelagert ist, wobei der Mitnehmer (3) auf dem Rahmen (1) schwingend um die zweite Achse (12) gelagert ist, die mit der Achse der Welle (14) parallel ist, wobei mindestens eine Stütze (2) auf dem Rahmen (1) schwingend um die zweite Achse der Welle (4) um die erste Achse (11) herum gelagert ist, die mit der Achse der Welle (14) parallel ist, wo mindestens eine Stütze (2) durch die Zugstange (6) mit mindestens einem Mitnehmer (3) durch die Drehzapfen (7) verbunden ist; wo Schwankung von mindestens einem Mitnehmer (3) durch die Anschläge (8) in der ersten und in der zweiten Position beschränkt ist, wobei in der ersten Position der Achsabstand der Achse der Welle (4) von der ersten Achse (11) kleiner ist als ihr Achsabstand in der zweiten Position; während die Anordnung mindestens einer Stütze (2), mindestens eines Rads (5) und mindestens eines Mitnehmers (3) so ist, dass falls mindestens auf einer Stütze (2) das Gewicht der Schubkarre zumindest teilweise beruht, mindestens ein Mitnehmer (3) in der ersten Position ist, wobei die horizontale Bewegung des Rahmens (1) der Schubkarre in einer Richtung senkrecht auf die Achse der Welle (4) einen Ausschlag von mindestens einer Stütze (2) in der auf die Achse der Welle (4) senkrechten Ebene und dadurch auch Umkippen von mindestens einem Mitnehmer (3) aus der ersten Position in die zweite Position als auch Verschiebung von mindestens einem Rad (5) bewirkt, **dadurch gekennzeichnet, dass** falls mindestens auf einer Stütze (2) das Gewicht der Schubkarre zumindest teilweise beruht und mindestens ein Mitnehmer (3) in der zweiten Position ist, bewirkt die horizontale Bewegung des Rahmens (1) der Schubkarre in der entgegengesetzten Richtung senkrecht auf die Achse der Welle (4) einen Ausschlag von mindestens einer Stütze (2) in der auf die Achse der Welle (4) senkrechten Ebene und dadurch auch Umkippen von mindestens einem Mitnehmer (3) aus der zweiten Position in die erste Position als auch Verschiebung von mindestens einem Rad (5).

2. Eine Schubkarre nach Anspruch 1, **dadurch gekennzeichnet, dass** die Zugstange (6) durch den Drehzapfen (7) in der Hälfte der Länge von mindestens einer Stütze (2) befestigt ist, die von der ersten Achse (11) mindestens einer Stütze (2) entfernt ist, und dass die Zugstange auf mindestens einem Mitnehmer (3) durch den Drehzapfen (7) an einer Stelle befestigt ist, deren Abstand von der zweiten Achse (12) mindestens eines Mitnehmers (3) kleiner ist als sein Abstand von der Achse der Welle (4).

3. Eine Schubkarre nach irgendeinem der Ansprüche 1 bis 2, **dadurch gekennzeichnet, dass** sie ein zwischen zwei Mitnehmern (3) eingelagertes Rad (5) und zwei Stützen (2) beinhaltet, wobei jede Stütze (2) mit einem Fuß (16) beendet ist.

4. Eine Schubkarre nach irgendeinem der Ansprüche 1 bis 2, **dadurch gekennzeichnet, dass** sie ein zwischen zwei Mitnehmern (3) eingelagertes Rad (5) und zwei Stützen (2) beinhaltet, wobei die Stützen (2) mit einem gemeinsamen Fuß (16) miteinander verbunden sind.

5. Eine Schubkarre nach irgendeinem der Ansprüche 1 bis 2, **dadurch gekennzeichnet, dass** sie zwei zwischen zwei Rädern (5) eingelagerte Mitnehmer (3) und zwei Stützen (2) beinhaltet, wobei jede Stütze (2) mit einem Fuß (16) beendet ist.

6. Eine Schubkarre nach irgendeinem der Ansprüche 1 bis 2, **dadurch gekennzeichnet, dass** sie zwei zwischen zwei Rädern (5) eingelagerte Mitnehmer (3) und zwei Stützen (2) beinhaltet, wobei die Stützen (2) mit einem gemeinsamen Fuß (16) miteinander verbunden sind.

7. Ein Verfahren zur Handhabung der Schubkarre nach irgendeinem der Ansprüche 1 bis 6, das folgenden Schritt einschließt:
- falls das Gewicht der Schubkarre zumindest teilweise auf mindestens einer Stütze (2) beruht, und gleichzeitig falls mindestens ein Mitnehmer (3) der Schubkarre in der ersten Position ist, bewirkt eine horizontale Verschiebung des Rahmens (1) der Schubkarre in einer Richtung senkrecht auf die Achse der Welle (4) einen Ausschlag von mindestens einer Stütze (2) und dadurch auch Umkippen von mindestens einem Mitnehmer (3) aus der ersten Position in die zweite Position als auch Verschiebung von mindestens einem Rad (5), **dadurch gekennzeichnet, dass** es weiter folgenden Schritt einschließt:
- falls auf mindestens einer Stütze (2) zumindest teilweise das Gewicht der Schubkarre beruht, und gleichzeitig falls mindestens ein Mitnehmer (3) der Schubkarre in der zweiten Position ist, bewirkt eine horizontale Verschiebung des Rahmens (1) der Schubkarre in der entgegengesetzten Richtung senkrecht auf die Achse der Welle (4) einen Ausschlag von mindestens einer Stütze (2) und dadurch auch Umkippen von mindestens einem Mitnehmer (3) aus der zweiten Position in die erste Position als auch Verschiebung von mindestens einem Rad (5).

8. Ein Verfahren nach Anspruch 7, das weiter folgenden Schritt einschließt:
- die Handgriffe (9) des Rahmens (1) der Schubkarre nach unten zudrücken, wenn mindestens eine der Stützen (2) im Kontakt mit dem Boden ist, um mindestens ein Rad (5) der Schubkarre zu entlasten.

## Revendications

1. Brouette à position variable d'au moins une roue, comprenant au moins une roue (5), un châssis (1) et une cuve, comprenant au moins un support rotatif (3) muni d'un logement (17) destiné à recevoir un arbre (4) d'au moins une roue (5) comportant ledit arbre (4), et au moins un appui (2), l'arbre (4) étant monté dans le logement (17), le support rotatif (3) étant monté sur le châssis (1) de manière oscillante autour d'un second axe (12) parallèle à l'axe de l'arbre (4), au moins un appui (2) étant monté sur le châssis (1) de manière oscillante dans un plan perpendiculaire à l'axe de l'arbre (4) autour d'un premier axe (11) parallèle à l'axe de l'arbre (4), au moins un appui (2) étant relié par une tige de liaison (6) à au moins un support rotatif (3) par des axes pivotants (7), le mouvement d'oscillation d'au moins un support rotatif (3) étant limité par des butées (8) en une première position et en une seconde position, dans laquelle la distance axiale entre l'axe de l'arbre (4) et le premier axe (11) est inférieure à leur distance axiale en seconde position, tandis que la disposition d'au moins un appui (2), d'au moins une roue (5) et d'au moins un support rotatif (3) est telle que, lorsque le poids de la brouette repose au moins partiellement sur au moins un appui (2), au moins un support rotatif (3) se trouve dans la première position, le déplacement horizontal du châssis (1) de la brouette dans une direction perpendiculaire à l'axe de l'arbre (4) provoquant le basculement d'au moins un appui (2) dans un plan perpendiculaire à l'axe de l'arbre (4) et ainsi le basculement d'au moins un support rotatif (3) de la première position vers la seconde position et le déplacement d'au moins une roue (5), **caractérisée en ce que,** lorsque le poids de la brouette repose au moins partiellement sur au moins un appui (2) et qu'au moins un support rotatif (3) se trouve dans la seconde position, le déplacement horizontal du châssis (1) de la brouette dans la direction opposée, perpendiculaire à l'axe de l'arbre (4), provoque le basculement d'au moins un appui (2) dans un plan perpendiculaire à l'axe de l'arbre (4) et ainsi le basculement d'au moins un support rotatif (3) de la seconde position vers la première position et le déplacement d'au moins une roue (5).

2. Brouette selon la revendication 1, **caractérisée en ce que** la tige de liaison (6) est fixée, par un axe pivotant (7), au milieu de la longueur d'au moins un appui (2) situé plus loin du premier axe (11) dudit appui (2), et fixée, par un axe pivotant (7), sur au moins un support rotatif (3) à un emplacement dont la distance par rapport au second axe (12) dudit support rotatif (3) est inférieure à sa distance par rapport à l'axe de l'arbre (4).

3. Brouette selon l'une quelconque des revendications 1 à 2, **caractérisée en ce qu'elle** comprend une roue (5) disposée entre deux supports rotatifs (3) et deux appuis (2), chaque appui (2) étant terminé par un patin (16).

4. Brouette selon l'une quelconque des revendications 1 à 2, **caractérisée en ce qu'**elle comprend une roue (5) disposée entre deux supports rotatifs (3) et deux appuis (2), les appuis (2) étant reliés par un patin commun (16).

5. Brouette selon l'une quelconque des revendications 1 à 2, **caractérisée en ce qu'**elle comprend deux supports rotatifs (3) disposés entre deux roues (5) et deux appuis (2), chaque appui (2) étant terminé par un patin (16).

6. Brouette selon l'une quelconque des revendications 1 à 2, **caractérisée en ce qu'**elle comprend deux supports rotatifs (3) disposés entre deux roues (5) et deux appuis (2), les appuis (2) étant reliés par un patin commun (16).

7. Procédé de manipulation d'une brouette selon l'une quelconque des revendications 1 à 6, comprenant l'étape suivante:
- lorsque le poids de la brouette repose au moins partiellement sur au moins un appui (2) et qu'au moins un support rotatif (3) de la brouette se trouve dans la première position, le déplacement horizontal du châssis (1) de la brouette dans une direction perpendiculaire à l'axe de l'arbre (4) provoque le basculement d'au moins un appui (2) et ainsi le basculement d'au moins un support rotatif (3) de la première position vers la seconde position et le déplacement d'au moins une roue (5), **caractérisé en ce qu'**il comprend en outre l'étape suivante:
- lorsque le poids de la brouette repose au moins partiellement sur au moins un appui (2) et qu'au moins un support rotatif (3) de la brouette se trouve dans la seconde position, le déplacement horizontal du châssis (1) de la brouette dans la direction opposée, perpendiculaire à l'axe de l'arbre (4), provoque le basculement d'au moins un appui (2) et ainsi le basculement d'au moins un support rotatif (3) de la seconde position vers la première position et le déplacement d'au moins une roue (5).

8. Procédé selon la revendication 7 comprenant en outre l'étape suivante:
- exercer une pression vers le bas sur les poignées (9) du châssis (1) de la brouette, lorsque au moins un appui (2) est en contact avec le sol, afin de soulager au moins une roue (5) de la brouette.
